# EUROPÄISCHE PATENTANMELDUNG

(11) **EP 4 582 314 A1**
(43) Veröffentlichungstag der Anmeldung: **09.07.2025**
(21) Anmeldenummer: 24220512.8
(22) Anmeldetag: 17.12.2024
(51) Int. Cl.: B60R 19/18, B60R 19/48, G01S 17/931, B29D 11/00

(54) **AUSSENVERKLEIDUNGSANORDNUNG FÜR EIN FAHRZEUG MIT EINEM AUSSENVERKLEIDUNGSTEIL AUS WENIGSTENS ZWEI KUNSTSTOFFMATERIALIEN UND MIT WENIGSTENS EINER OPTISCHEN SENSOREINHEIT**

(30) Priorität: 21.12.2023 DE 202023107571 U
(71) Anmelder: REHAU Automotive SE & Co. KG, 95111 Rehau (DE)
(72) Erfinder: Reichstein, Johann, 95448 Bayreuth (DE)

(57) **Zusammenfassung**

Die Erfindung betrifft eine Außenverkleidungsanordnung für ein Fahrzeug mit einem Außenverkleidungsteil (1) aus wenigstens zwei Kunststoffmaterialien und mit wenigstens einer optischen Sensoreinheit (2), wobei das Außenverkleidungsteil (1) ein dünnwandig ausgebildetes Verkleidungselement (3) mit einer bestimmungsgemäßen Sichtseite (S) und einer der Sichtseite (S) gegenüberliegenden Rückseite (I) umfasst, wobei das Verkleidungselement (3) ein Trägersubstrat (4) aus einem ersten Kunststoffmaterial und ein Decksubstrat (5) aus einem zweiten Kunststoffmaterial auf oder über dem Trägersubstrat (4) umfasst, wobei die optische Sensoreinheit (2), der Rückseite (I) zugewandt, hinter einem Teilbereich (6) des Verkleidungselements (3) angeordnet ist, wobei zumindest der Teilbereich (6) für mindestens eine Wellenlänge des sichtbaren oder infraroten Lichtspektrums durchdringbar ist, die von der optischen Sensoreinheit (2) abgestrahlt und/oder die auf die optische Sensoreinheit (2) eingestrahlt wird, wobei wenigstens eines der beiden Substrate (4, 5) in dem Teilbereich (6) so ausgebildet ist, dass der Teilbereich (6) als eine optische Linse fungiert.

## Beschreibung

Die vorliegende Erfindung betrifft eine Außenverkleidungsanordnung für ein Fahrzeug mit einem Außenverkleidungsteil aus wenigstens zwei Kunststoffmaterialien und mit wenigstens einer optischen Sensoreinheit, wobei das Außenverkleidungsteil ein dünnwandig ausgebildetes Verkleidungselement mit einer bestimmungsgemäßen Sichtseite und einer der Sichtseite gegenüberliegenden Rückseite umfasst, wobei das Verkleidungselement ein Trägersubstrat aus einem ersten Kunststoffmaterial und ein Decksubstrat aus einem zweiten Kunststoffmaterial auf oder über dem Trägersubstrat umfasst, wobei die optische Sensoreinheit, der Rückseite zugewandt, hinter einem Teilbereich des Verkleidungselements angeordnet ist, wobei zumindest der Teilbereich für mindestens eine Wellenlänge des sichtbaren oder infraroten Lichtspektrums durchdringbar ist, die von der optischen Sensoreinheit abgestrahlt und/oder die auf die optische Sensoreinheit eingestrahlt wird.

Nachteilig an bekannten Außenverkleidungsanordnungen ist, dass die optische Sensoreinheit für eine hohe Lichtausbeute mit relativ großen Kameraobjektiven ausgerüstet sein muss.

Aufgabe der vorliegenden Erfindung ist es daher eine Außenverkleidungsanordnung anzugeben, die mit kompakteren Sensoreinheiten eine gleiche oder sogar eine höhere Lichtausbeute ermöglicht.

Diese Aufgabe wird vorliegend gelöst durch eine Außenverkleidungsanordnung für ein Fahrzeug mit einem Außenverkleidungsteil aus wenigstens zwei Kunststoffmaterialien und mit wenigstens einer optischen Sensoreinheit, wobei das Außenverkleidungsteil ein dünnwandig ausgebildetes Verkleidungselement mit einer bestimmungsgemäßen Sichtseite und einer der Sichtseite gegenüberliegenden Rückseite umfasst, wobei das Verkleidungselement ein Trägersubstrat aus einem ersten Kunststoffmaterial und ein Decksubstrat aus einem zweiten Kunststoffmaterial auf oder über dem Trägersubstrat umfasst, wobei die optische Sensoreinheit, der Rückseite zugewandt, hinter einem Teilbereich des Verkleidungselements angeordnet ist, wobei zumindest der Teilbereich für mindestens eine Wellenlänge des sichtbaren oder infraroten Lichtspektrums durchdringbar ist, die von der optischen Sensoreinheit abgestrahlt und/oder die auf die optische Sensoreinheit eingestrahlt wird, wobei wenigstens eines der beiden Substrate in dem Teilbereich so ausgebildet ist, dass der Teilbereich als eine optische Linse fungiert. Vorteilhafterweise übernimmt bei einer erfindungsgemäßen Außenverkleidungsanordnung ein Teilbereich des vor der optischen Sensoreinheit angeordneten Verkleidungselements die Funktion einer optischen Linse und verlagert sozusagen einen Teil der optischen Komponenten der Sensoreinheit in das Verkleidungselement. Hierdurch können kompaktere optische Sensoreinheiten zum Einsatz kommen, die weniger Bauraum benötigen und ein geringeres Gewicht aufweisen. Eine "optische Linse" ist ein Objekt, das Licht eines bestimmten Lichtspektrums in seiner Bahn ablenkt.

Das infrarote Lichtspektrum bezieht sich auf den Bereich des elektromagnetischen Spektrums zwischen sichtbarem Licht und der längerwelligen Terahertzstrahlung. Es umfasst Licht mit einer Wellenlänge zwischen 780 nm und 1 mm. Das sichtbare Lichtspektrum, auch als Licht- oder Farbspektrum bezeichnet, ist der Teil des elektromagnetischen Spektrums, den das menschliche Auge wahrnehmen kann. Es reicht von Rot (etwa 760 nm) bis Violett (etwa 380 nm).

Das Verkleidungselement kann zusätzlich bei einer Beleuchtung von der Innenseite her in wenigstens einem Leuchtbereich lokal durchleuchtbar ausgebildet sein.

Als eine Variante können beide Substrate in dem Teilbereich so ausgebildet sein, dass der Teilbereich als eine optische Linse fungiert.

Zur weiteren Optimierung kann sich als eine Variante der Erfindung die jeweilige optische Dichte der beiden Kunststoffmaterialien, für die mindestens eine Wellenlänge, voneinander unterscheiden. Durch die variierenden Brechungsindizes kann die optische Wirkung des Teilbereichs weiter verstärkt werden.

Das Trägersubstrat kann im Teilbereich konvex oder konkav oder bi-konvex oder bi-konkav ausgebildet sein. Das Decksubstrat kann im Teilbereich konvex oder konkav oder bi-konvex oder bi-konkav ausgebildet sein. Diese Angaben beziehen sich jeweils auf einen Querschnitt durch den Teilbereich.

Auf dem Decksubstrat kann wenigstens eine zusätzliche Schutzschicht vorgesehen sein, insbesondere eine Schutzschicht die ein Silan oder eine Silanverbindung umfasst. Die Schutzschicht kann insbesondere eine Beschädigung durch Steinschläge oder abrasive Medien vermindern.

Das erste Kunststoffmaterial kann bevorzugt ein transparentes oder transluzentes Kunststoffmaterial zur Ausbildung eines transparenten oder transluzenten Trägersubstrats sein. Das transparente oder transluzente Kunststoffmaterial kann Polypropylen und/oder Polycarbonat und/oder Polyethylenterephthalat und/oder Acrylnitril-Butadien-Styrol und/oder Polymethylmethacrylat und/oder Polyamid umfassen.

Das zweite Kunststoffmaterial kann zur Ausbildung des Decksubstrats Polyurethan oder Polyurea umfassen.

Das Decksubstrat kann vorzugsweise im Reaction Injection Moulding-Verfahren (RIM) auf das Trägersubstrat aufgebracht sein.

Das Außenverkleidungsteil kann eine Stoßfängerverkleidung oder eine Türaußenverkleidung oder eine Heckklappenaußenverkleidung oder eine Kotflügelverkleidung oder eine Frontmaske oder eine Kühlerverkleidung sein. Eine Frontmaske ist derjenige Teil eines Fahrzeugs an deren Stelle sich bei Verbrennungsfahrzeugen der Kühlergrill befunden hat. Insbesondere bei Elektrofahrzeugen ist diese Frontmaske nicht mehr als Lufteinlass zu dem Kühler (den es hier nicht mehr gibt) ausgebildet, sondern als Designelement in der Fahrzeugmitte vorgesehen.

Die optische Sensoreinheit kann insbesondere eine Umfeldbeobachtungskamera oder eine Lidarsensoreinheit sein. Ein Lidarsensor (Abkürzung für englisch Light detection and ranging oder Light imaging, detection and ranging) dient zur optischen Abstands- und Geschwindigkeitsmessung. Statt der Radiowellen wie beim Radar werden Laserstrahlen verwendet. Die Technologie wird auch in der Steuerung und Navigation autonomer Fahrzeuge verwendet. Ein typischer Lidarsensor sendet gepulste Lichtwellen in die Umgebung aus. Diese Pulse prallen von umgebenden Objekten ab und kehren zum Sensor zurück. Der Sensor verwendet die Zeit, die jeder Puls benötigt hat, um zum Sensor zurückzukehren, um beispielsweise die zurückgelegte Entfernung zu berechnen. Typische Wellenlängen liegen zwischen 905 nm bis 1800 nm, können jedoch je nach Anwendungsfall auch außerhalb dieses Bereichs liegen.

### Ausführungsbeispiele

Im Folgenden wird die Erfindung anhand lediglich Ausführungsbeispiele darstellender Zeichnungen erläutert. Es zeigen schematisch:
- Fig. 1: eine Frontansicht einer Außenverkleidungsanordnung;
- Fig. 2a - 2e: Querschnittsdarstellungen entlang der Schnittlinie A-A aus Fig. 1 in verschiedene Varianten.

In den Figuren werden gleiche oder funktionsgleiche Elemente mit den gleichen Bezugszeichen versehen.

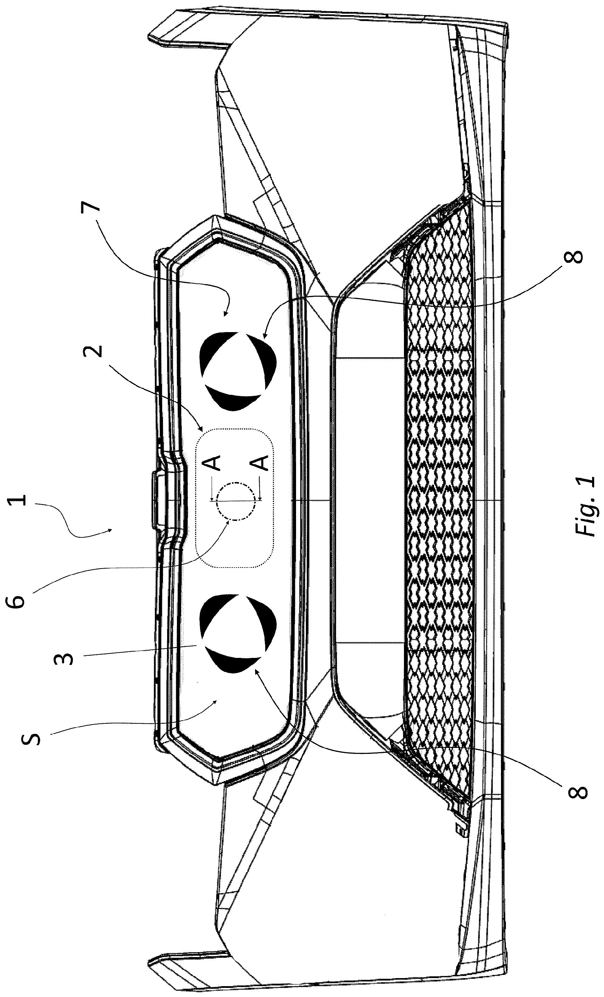

In der Fig. 1 ist eine Frontansicht einer erfindungsgemäßen Außenverkleidungsteilanordnung für ein Fahrzeug dargestellt. Die Außenverkleidungsanordnung für ein Fahrzeug ist mit einem Außenverkleidungsteil 1 aus wenigstens zwei Kunststoffmaterialien und mit wenigstens einer optischen Sensoreinheit 2 (hier schematisch angedeutet, da das Außenverkleidungsteil 1 die Sensoreinheit überdeckt) gebildet. Das Verkleidungselement ist zusätzlich bei einer Beleuchtung von der Innenseite her in wenigstens einem Leuchtbereich 8 lokal durchleuchtbar ausgebildet.

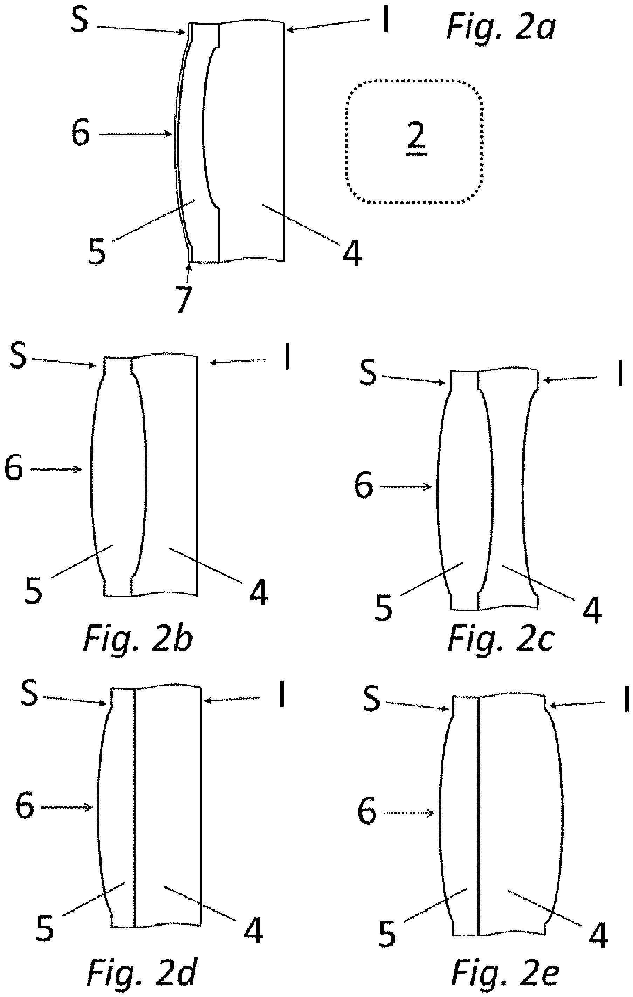

Das Außenverkleidungsteil 1 umfasst ein dünnwandig ausgebildetes Verkleidungselement 3 mit einer bestimmungsgemäßen Sichtseite S und einer der Sichtseite S gegenüberliegenden Rückseite I (vgl. auch Fig. 2a - 2e).

Das Verkleidungselement 3 umfasst ein Trägersubstrat 4 aus einem ersten Kunststoffmaterial und ein Decksubstrat 5 aus einem zweiten Kunststoffmaterial auf oder über dem Trägersubstrat 4. Trägersubstrat 4 und Decksubstrat 5 bilden zusammen also eine Schichtstruktur.

Die optische Sensoreinheit 2, der Rückseite I zugewandt, ist hinter einem Teilbereich 6 des Verkleidungselements 3 angeordnet (vgl. Fig. 1 und Fig. 2a). Zumindest der Teilbereich 6 ist für mindestens eine Wellenlänge des sichtbaren oder infraroten Lichtspektrums durchdringbar, die von der optischen Sensoreinheit 2 abgestrahlt und/oder die auf die optische Sensoreinheit 2 eingestrahlt (beispielsweise die Rückstrahlung von Lidarstrahlung von einem Objekt bei der Verwendung einer Lidarsensoreinheit) wird.

Wenigstens eines der beiden Substrate 4, 5 ist in dem Teilbereich 6 so ausgebildet, dass der Teilbereich 6 als eine optische Linse fungiert (vgl. Fig. 2a - Fig. 2e).

Es kann sein, dass sogar beide Substrate 4, 5 in dem Teilbereich 6 so ausgebildet sind, dass der Teilbereich 6 als eine optische Linse fungiert. Beispiel hierfür sind Fig. 2a (das Trägersubstrat 4 ist im Teilbereich 6 konvex und das Decksubstrat ist im Teilbereich 6 konvex ausgebildet), Fig. 2b (das Trägersubstrat 4 ist im Teilbereich 6 konkav und das Decksubstrat ist im Teilbereich 6 bi-konvex ausgebildet), Fig. 2c (das Trägersubstrat 4 ist im Teilbereich 6 bi-konkav und das Decksubstrat ist im Teilbereich 6 bi-konvex ausgebildet) und Fig. 2e (das Trägersubstrat 4 ist im Teilbereich 6 konvex und das Decksubstrat ist im Teilbereich 6 konvex ausgebildet). In der Fig, 2a ist dargestellt, dass auf dem Decksubstrat 5 wenigstens eine zusätzliche Schutzschicht 7 vorgesehen sein kann, insbesondere eine Schutzschicht 7 die ein Silan oder eine Silanverbindung umfasst. Die in den weiteren Figuren dargestellten Varianten können selbstredend auch mit einer derartigen Schutzschicht 7 versehen sein. Lediglich aus Gründen der besseren Übersichtlichkeit, ist die Schutzschicht 7 hier nicht explizit eingezeichnet.

Das erste Kunststoffmaterial ist ein transparentes oder transluzentes Kunststoffmaterial zur Ausbildung eines transparenten oder transluzenten Trägersubstrats 4. Das transparente oder transluzente Kunststoffmaterial umfasst insbesondere Polycarbonat, kann aber auch Polypropylen oder Polyethylenterephthalat oder Acrylnitril-Butadien-Styrol oder Polymethylmethacrylat oder Polyamid umfassen.

Das zweite Kunststoffmaterial zur Ausbildung des Decksubstrats 5 umfasst Polyurethan oder Polyurea.

Das Außenverkleidungsteil 1 in diesem Ausführungsbeispiel ist eine Stoßfängerverkleidung, wobei das Verkleidungselement 3 als Frontmaske ausgebildet ist, die in der Stoßfängerverkleidung aufgenommen ist.

Das Decksubstrat 5 kann insbesondere im Reaction Injection Moulding-Verfahren (RIM) auf das Trägersubstrat 4 aufgebracht sein.

## Patentansprüche

1. Außenverkleidungsanordnung für ein Fahrzeug mit einem Außenverkleidungsteil (1) aus wenigstens zwei Kunststoffmaterialien und mit wenigstens einer optischen Sensoreinheit (2),
wobei das Außenverkleidungsteil (1) ein dünnwandig ausgebildetes Verkleidungselement (3) mit einer bestimmungsgemäßen Sichtseite (S) und einer der Sichtseite (S) gegenüberliegenden Rückseite (I) umfasst,
wobei das Verkleidungselement (3) ein Trägersubstrat (4) aus einem ersten Kunststoffmaterial und ein Decksubstrat (5) aus einem zweiten Kunststoffmaterial auf oder über dem Trägersubstrat (4) umfasst,
wobei die optische Sensoreinheit (2), der Rückseite (I) zugewandt, hinter einem Teilbereich (6) des Verkleidungselements (3) angeordnet ist,
wobei zumindest der Teilbereich (6) für mindestens eine Wellenlänge des sichtbaren oder infraroten Lichtspektrums durchdringbar ist, die von der optischen Sensoreinheit (2) abgestrahlt und/oder die auf die optische Sensoreinheit (2) eingestrahlt wird,
**dadurch gekennzeichnet, dass**
wenigstens eines der beiden Substrate (4, 5) in dem Teilbereich (6) so ausgebildet ist, dass der Teilbereich (6) als eine optische Linse fungiert.

2. Außenverkleidungsanordnung nach Anspruch 1, **dadurch gekennzeichnet, dass** beide Substrate (4, 5) in dem Teilbereich (6) so ausgebildet sind, dass der Teilbereich (6) als eine optische Linse fungiert.

3. Außenverkleidungsanordnung nach Anspruch 1 oder 2, **dadurch gekennzeichnet, dass** sich die jeweilige optische Dichte der beiden Kunststoffmaterialien, für die mindestens eine Wellenlänge, voneinander unterscheidet,

4. Außenverkleidungsanordnung nach einem der vorstehenden Ansprüche, **dadurch gekennzeichnet, dass** das Trägersubstrat (4) im Teilbereich (6) konvex oder konkav oder bi-konvex oder bi-konkav ausgebildet ist.

5. Außenverkleidungsanordnung nach einem der vorstehenden Ansprüche, **dadurch gekennzeichnet, dass** das Decksubstrat (5) im Teilbereich (6) konvex oder konkav oder bi-konvex oder bi-konkav ausgebildet ist.

6. Außenverkleidungsanordnung nach einem der vorstehenden Ansprüche, **dadurch gekennzeichnet, dass** auf dem Decksubstrat (5) wenigstens eine zusätzliche Schutzschicht (7) vorgesehen ist, insbesondere eine Schutzschicht (7) die ein Silan oder eine Silanverbindung umfasst.

7. Außenverkleidungsanordnung nach einem der vorstehenden Ansprüche, **dadurch gekennzeichnet, dass** das erste Kunststoffmaterial ein transparentes oder transluzentes Kunststoffmaterial zur Ausbildung eines transparenten oder transluzenten Trägersubstrats (4) ist.

8. Außenverkleidungsanordnung nach einem der vorstehenden Ansprüche, **dadurch gekennzeichnet, dass** das transparente oder transluzente Kunststoffmaterial Polypropylen und/oder Polycarbonat und/oder Polyethylenterephthalat und/oder Acrylnitril-Butadien-Styrol und/oder Polymethylmethacrylat und/oder Polyamid umfasst.

9. Außenverkleidungsanordnung nach einem der vorstehenden Ansprüche, **dadurch gekennzeichnet, dass** das zweite Kunststoffmaterial zur Ausbildung des Decksubstrats (5) Polyurethan oder Polyurea umfasst.

10. Außenverkleidungsanordnung nach einem der vorstehenden Ansprüche, **dadurch gekennzeichnet, dass** das Außenverkleidungsteil (1) eine Stoßfängerverkleidung oder eine Türaußenverkleidung oder eine Heckklappenaußenverkleidung oder eine Kotflügelverkleidung oder eine Frontmaske oder eine Kühlerverkleidung ist.

11. Außenverkleidungsanordnung nach einem der vorstehenden Ansprüche, **dadurch gekennzeichnet, dass** das Decksubstrat (5) im Reaction Injection Moulding-Verfahren (RIM) auf das Trägersubstrat (4) aufgebracht ist.
